# EUROPEAN PATENT APPLICATION

(11) **EP 4 838 849 A1**
(43) Date of publication of application: **11.11.2026**
(21) Application number: 26164853.9
(22) Date of filing: 16.03.2026
(51) Int. Cl.: H04L 41/0631, H04L 41/16

(54) **METHOD AND SYSTEM FOR ANOMALY DATA PROCESSING FOR CAUSE AND SOLUTION IDENTIFICATION**

(30) Priority: 08.05.2025 IN 202521044582
(71) Applicant: Tata Consultancy Services Limited, Mumbai, Maharashtra 400 021 (IN)
(72) Inventor: RATH, Hemant Kumar, 751024 Bhubaneswar, Odisha (IN); NADAF, Shameemraj Mohinuddin, 560066 Bangalore, Karnataka (IN); MISHRA, Garima, 560066 Bangalore, Karnataka (IN); BHAUMIK, Sumitro, 700156 Kolkata, West Bengal (IN); PATRO, Sumanta, 751024 Bhubaneswar, Odisha (IN); YADAV, Indu, 751024 Bhubaneswar, Odisha (IN); SUMAN, Santan, 560066 Bangalore, Karnataka (IN); PAL, Arpan, 700160 Kolkata, West Bengal (IN); KUMAR, Ganesh Suresh, 600119 Chennai, Tamil Nadu (IN)
(74) Representative: Goddar, Heinz J.

(57) **Abstract**

Various anomaly detection systems exist today. Though the existing solutions are capable of determining anomalies of various types to a certain extent, it is essential to understand what caused the detected anomaly and what is the associated solution. Embodiments disclosed herein provide a method and system for anomaly data processing for cause and solution identification. The system receives an input data comprising information on one or more applications and associated underlying networks information. The input data is processed to determine predict one or more anomalies in the data. Further, a prompt is generated based on the predicted one or more anomalies, based on an identified context data associated with each of the predicted one or more anomalies. Further, a cause and solution of each of the one or more anomalies is determined by prompting the Large Language Model (LLM) using the generated prompt.

## Description

### CROSS-REFERENCE TO RELATED APPLICATIONS AND PRIORITY

The present application claims priority from Indian application no. 202521044582, filed on May 8, 2025.

### TECHNICAL FIELD

The disclosure herein generally relates to data processing, and, more particularly, to a method and system for anomaly data processing for cause and solution identification.

### BACKGROUND

The challenges facing Telecom as well as enterprise IT environments are becoming increasingly complex, with the integration of 5G/6G particularly in multi-cloud, hybrid environments, and regulated industries. There are several new services emerging with extremely tight Key Performance Indicator (KPI) and Key Value Indicators (KVIs) requirements. The business context as well as the intents also play a major role here. The network is complex with several vendor specific solutions operating in different technology generations, such as, 4G/5G/6G, etc. With complexity of the networks increasing and new services emerging, the network operation is also prone to have various anomalies.

To detect such anomalies, various anomaly detection systems exist today. Though the existing solutions are capable of determining anomalies of various types to a certain extent, it is essential to understand what caused the detected anomaly and what is the associated solution.

### SUMMARY

Embodiments of the present disclosure present technological improvements as solutions to one or more of the above-mentioned technical problems recognized by the inventors in conventional systems. For example, in one embodiment, a processor implemented method is provided. The method includes: receiving, via one or more hardware processors, an input data comprising information on one or more applications and associated underlying networks information; pre-processing, via the one or more hardware processors, the input data to generate a pre-processed input data, wherein the processed input data is stored in an associated common data model; predicting, via the one or more hardware processors, one or more anomalies in the pre-processed data, comprising: extracting a plurality of features from the input data; identifying at least one anomaly detection algorithm to process the input data, based on the extracted plurality of features; and predicting the one or more anomalies by processing the input data using the identified at least one anomaly detection algorithm; generating a prompt, via the one or more hardware processors, based on the predicted one or more anomalies, comprising iteratively performing: identifying a context data associated with each of the predicted one or more anomalies; retrieving, from an associated database, the context data that matches the identified context of each of the predicted one or more anomalies to obtain a plurality of contexts; ranking the plurality of contexts by applying a re-ranking algorithm on the obtained plurality of contexts; obtaining a response from a Large Language Model (LLM) by feeding a query, a top ranked context from the ranked plurality of contexts, and an instruction as a prompt to the LLM; and determining a relevancy score for the obtained response by valuating the response, wherein the relevancy score is computed as the function of a generation score and a context score, and the iterative processing is performed till the relevancy score reaches a threshold of relevancy score, and wherein the prompt when the relevancy score reaches the threshold of relevancy score is a final prompt; and determining a cause and solution of each of the one or more anomalies by prompting the LLM using the final prompt.

In an aspect of the method, the input data comprises of at least one of a network services context and a business context, and wherein the network services context and a business context comprises of a business requirement, a revenue-driven user experience, a service requirement, a functional-driven attribute delivery, a time series data, and real-time sensing data.

In another aspect of the method, the at least one anomaly detection algorithm is selected from a plurality of anomaly detection algorithms based on a metric score, and wherein the metric score is a function of a Qualitative data and a Quantitative data determined from a business context and associated with one or more key performance indicators.

In another aspect of the method, the determined cause and solution of each of the one or more anomalies is verified against an original cause and an original solution.

In another aspect of the method, the determined cause, generated by the LLM, is automatically verified using a plurality of pre-programmed subroutines, and wherein the plurality of pre-programmed subroutines utilize a plurality of network tools for verifying the determined cause.

In another aspect, a system is provided. The system includes one or more hardware processors, a communication interface, and a memory storing a plurality of instructions. The plurality of instructions cause the one or more hardware processors to: receive an input data comprising information on one or more applications and associated underlying networks information; pre-process the input data to generate a pre-processed input data, wherein the processed input data is stored in an associated common data model; predict one or more anomalies in the pre-processed data, by: extracting a plurality of features from the input data; identifying at least one anomaly detection algorithm to process the input data, based on the extracted plurality of features; and predicting the one or more anomalies by processing the input data using the identified at least one anomaly detection algorithm; generate a prompt based on the predicted one or more anomalies, by iteratively performing: identifying a context data associated with each of the predicted one or more anomalies; retrieving, from an associated database, the context data that matches the identified context of each of the predicted one or more anomalies to obtain a plurality of contexts; ranking the plurality of contexts by applying a re-ranking algorithm on the obtained plurality of contexts; obtaining a response from a LLM by feeding a query, a top ranked context from the ranked plurality of contexts, and an instruction as a prompt to the LLM; and determining a relevancy score for the obtained response by valuating the response, wherein the relevancy score is computed as the function of a generation score and a context score, and the iterative processing is performed till the relevancy score reaches a threshold of relevancy score, and wherein the prompt when the relevancy score reaches the threshold of relevancy score is a final prompt; and determine a cause and solution of each of the one or more anomalies by prompting the LLM using the final prompt.

In an aspect of the system, the input data comprises of at least one of a network services context and a business context, and wherein the network services context and a business context comprises of a business requirement, a revenue-driven user experience, a service requirement, a functional-driven attribute delivery, a time series data, and real-time sensing data.

In another aspect of the system, the one or more hardware processors are configured to select the at least one anomaly detection algorithm from a plurality of anomaly detection algorithms, based on a metric score, and wherein the metric score is a function of a Qualitative data and a Quantitative data determined from a business context and associated one or more key performance indicators.

In another aspect of the system, the one or more hardware processors are configured to verify the determined cause and solution of each of the one or more anomalies against an original cause and an original solution.

In another aspect of the system, the one or more hardware processors are configured to automatically verify the determined the cause, generated by the LLM, using a plurality of pre-programmed subroutines, and wherein the plurality of pre-programmed subroutines utilize a plurality of network tools for verifying the determined cause.

In yet another aspect, there are provided one or more non-transitory machine-readable information storage mediums comprising one or more instructions which when executed by one or more hardware processors cause receiving an input data comprising information on one or more applications and associated underlying networks information; pre-processing the input data to generate a pre-processed input data, wherein the processed input data is stored in an associated common data model; predicting one or more anomalies in the pre-processed data, by: extracting a plurality of features from the input data; identifying at least one anomaly detection algorithm to process the input data, based on the extracted plurality of features; and predicting the one or more anomalies by processing the input data using the identified at least one anomaly detection algorithm; generating a prompt based on the predicted one or more anomalies, by iteratively performing: identifying a context data associated with each of the predicted one or more anomalies; retrieving, from an associated database, the context data that matches the identified context of each of the predicted one or more anomalies to obtain a plurality of contexts; ranking the plurality of contexts by applying a re-ranking algorithm on the obtained plurality of contexts; obtaining a response from a LLM by feeding a query, a top ranked context from the ranked plurality of contexts, and an instruction as a prompt to the LLM; and determining a relevancy score for the obtained response by valuating the response, wherein the relevancy score is computed as the function of a generation score and a context score, and the iterative processing is performed till the relevancy score reaches a threshold of relevancy score, and wherein the prompt when the relevancy score reaches the threshold of relevancy score is a final prompt; and determining a cause and solution of each of the one or more anomalies by prompting the LLM using the final prompt.

In an aspect of the non-transitory computer readable medium, the input data comprises of at least one of a network services context and a business context, and wherein the network services context and a business context comprises of a business requirement, a revenue-driven user experience, a service requirement, a functional-driven attribute delivery, a time series data, and real-time sensing data.

In another aspect of the non-transitory computer readable medium, the one or more hardware processors are configured to select the at least one anomaly detection algorithm from a plurality of anomaly detection algorithms, based on a metric score, and wherein the metric score is a function of a Qualitative data and a Quantitative data determined from a business context and associated one or more key performance indicators.

In another aspect of the non-transitory computer readable medium, the one or more hardware processors are configured to verify the determined cause and solution of each of the one or more anomalies against an original cause and an original solution.

In another aspect of the non-transitory computer readable medium, the one or more hardware processors are configured to automatically verify the determined the cause, generated by the LLM, using a plurality of pre-programmed subroutines, and wherein the plurality of pre-programmed subroutines utilize a plurality of network tools for verifying the determined cause.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for anomaly cause and solution detection, according to some embodiments of the present disclosure.
FIG. 2 is a flow diagram depicting steps involved in the process of anomaly cause and solution detection, using the system of FIG. 1, according to some embodiments of the present disclosure.
FIG. 3 is a flow diagram depicting steps involved in the process of anomaly detection, using the system of FIG. 1, according to some embodiments of the present disclosure.
FIG. 4 is a flow diagram depicting steps involved in the process of generating a prompt to trigger a Large Language Model (LLM), using the system of FIG. 1, according to some embodiments of the present disclosure.
FIG. 5 is a functional flow diagram of the process of anomaly cause and solution detection, using the system of FIG. 1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The challenges facing Telecom as well as enterprise IT environments are becoming increasingly complex, with the integration of 5G/6G particularly in multi-cloud, hybrid environments, and regulated industries. There are several new services emerging with extremely tight Key Performance Indicator (KPI) and Key Value Indicators (KVIs) requirements. The business context as well as the intents also play a major role here. The network is complex with several vendor specific solutions operating in different technology generations, such as, 4G/5G/6G, etc. With complexity of the networks increasing, they are also prone to have various anomalies. To detect such anomalies, various anomaly detection systems exist. Though they are capable of determining anomalies of various types, it is essential to understand what caused the detected anomaly and what is the associated solution.

To address these challenges, a method and system for anomaly data processing for cause and solution identification is provided. In this method, an input data comprising information on one or more applications and associated underlying networks information are received as input. Further, the input data is pre-processed to generate a pre-processed input data, wherein the processed input data is stored in an associated common data model. Further, one or more anomalies in the pre-processed data are predicted, by: extracting a plurality of features from the input data; identifying at least one anomaly detection algorithm to process the input data, based on the extracted plurality of features; and predicting the one or more anomalies by processing the input data using the identified at least one anomaly detection algorithm. Further, a prompt is generated based on the predicted one or more anomalies, by iteratively performing the following steps. In this process, a context data associated with each of the predicted one or more anomalies is identified. Further, from an associated database, the context data that matches the identified context of each of the predicted one or more anomalies is retrieved to obtain a plurality of contexts. Further, the plurality of contexts are ranked by applying a re-ranking algorithm on the obtained plurality of contexts. Further, a response is obtained from a LLM by feeding a query, a top ranked context from the ranked plurality of contexts, and an instruction as a prompt to the LLM. Further, a relevancy score is determined for the obtained response by valuating the response, wherein the relevancy score is computed as the function of a generation score and a context score. The iterative processing is performed till the relevancy score reaches a threshold of relevancy score, and wherein the prompt when the relevancy score reaches the threshold of relevancy score is a final prompt. Once the final prompt is generated, further, a cause and solution of each of the one or more anomalies is determined by prompting the LLM using the final prompt. This approach solves the challenges that exist approaches by determining cause and solution of anomalies, which the existing anomaly processing systems fail to do.

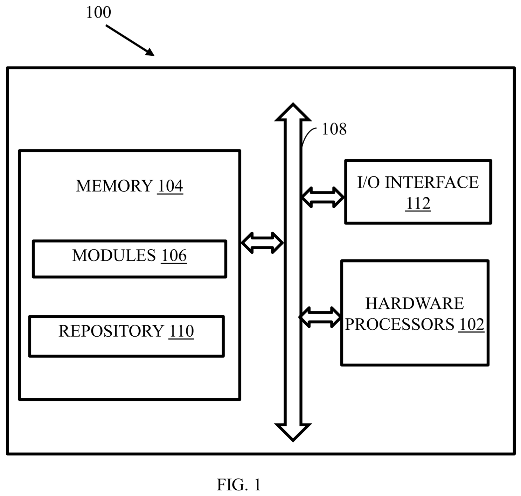

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

FIG. 1 illustrates an exemplary system for anomaly cause and solution detection, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of anomaly cause and solution detection, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the anomaly cause and solution detection.

The data repository (or repository) 110 may include a plurality of abstracted piece of code for refinement and data that is processed, received, or generated as a result of the execution of the plurality of modules in the module(s) 106.

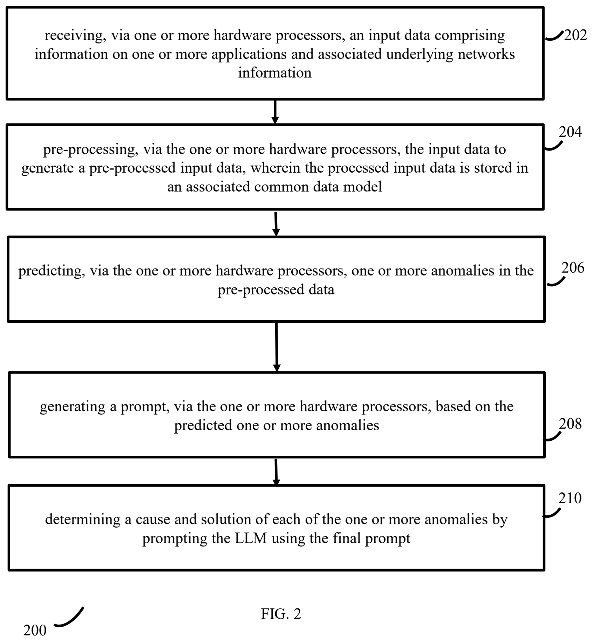

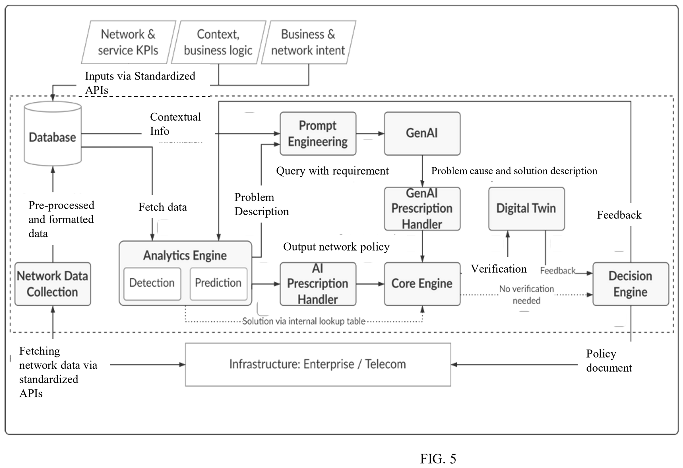

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIGS. 2, 3, and 4, and the functional block diagram in FIG. 5.

FIG. 2 is a flow diagram depicting steps involved in the process of anomaly cause and solution detection, using the system of FIG. 1, according to some embodiments of the present disclosure. In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIGS. 2, 3, and 4, and the functional block diagram in FIG. 5. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of method 200 of FIG. 2, the system 100 receives, via the one or more hardware processors 102, an input data comprising information on one or more applications and associated underlying networks information. For example, consider a scenario, where banking applications are deployed over an underlying network - hybrid networks comprising of telecom and enterprise. In this case, the input data received indicate how is the application performing and how much delay is being experienced in accessing the application due to networking issues; whether there is any problem in the network or not, and if yes, where and what kind of problem, and so on. The input data comprises of at least one of a network services context and a business context, of the one or more applications and associated underlying networks information. The network services context and a business context comprises of a business requirement, a revenue-driven user experience, a service requirement, a functional-driven attribute delivery, a time series data, and real-time sensing data. In the context of the banking application referred to above, the business requirement maybe that there should not be any un-traced or un-accounted payment. All the payments should be tagged to sessions and users. Any wrong payment or mis-payment can lead to extra cost, which should be avoided. The service requirement in this case can be defined by the bank or the application, attributes related to session time out, One Time Password (OTP) time out, etc., time-series data - network congestion, server usage, network issues, real-time sensing - all these are to be monitored in real-time.

Further, at step 204 of the method 200, the system 100 pre-processes, via the one or more hardware processors 102, the input data to generate a pre-processed input data. The pre-processing involves data cleaning, data integration, data normalization, and feature extraction etc. The processed input data is stored in an associated common data model.

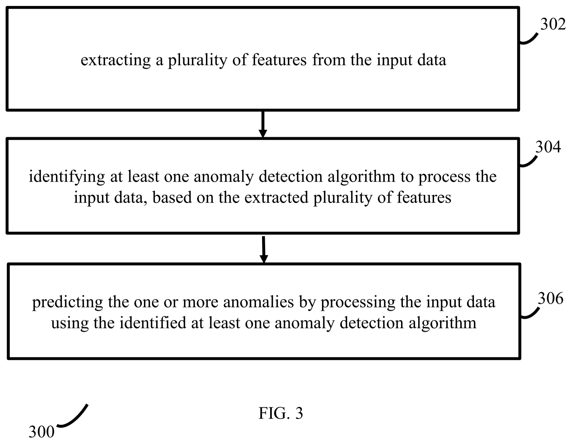

Further, at step 206 of the method 200, the system 100 predicts, via the one or more hardware processors 102, one or more anomalies in the pre-processed data. Various steps involved in predicting one or more anomalies are depicted in method 300 in FIG. 3, and are explained hereafter. At step 302 of the method 300, the system 100 extracting a plurality of features from the input data. The system 100 may use any suitable feature extraction technique such as but not limited to Autoencoders, Principal Component Analysis (PCA) to extract the plurality of features. The plurality of features such as data rate, bandwidth, jitter, latency, bit error rate, packet loss, etc., represent various network domain characteristics related to anomaly. Further, at step 304 of the method 300, the system 100 identifies at least one anomaly detection algorithm to process the input data, based on the extracted plurality of features. The system 100 selects the at least one anomaly detection algorithm from a plurality of anomaly detection algorithms based on a metric score. The metric score is a function of a Qualitative data and a Quantitative data determined from a business context and associated one or more key performance indicators. Further, at step 306 of the method 300, the system 100 predicts the one or more anomalies by processing the input data using the identified at least one anomaly detection algorithm.

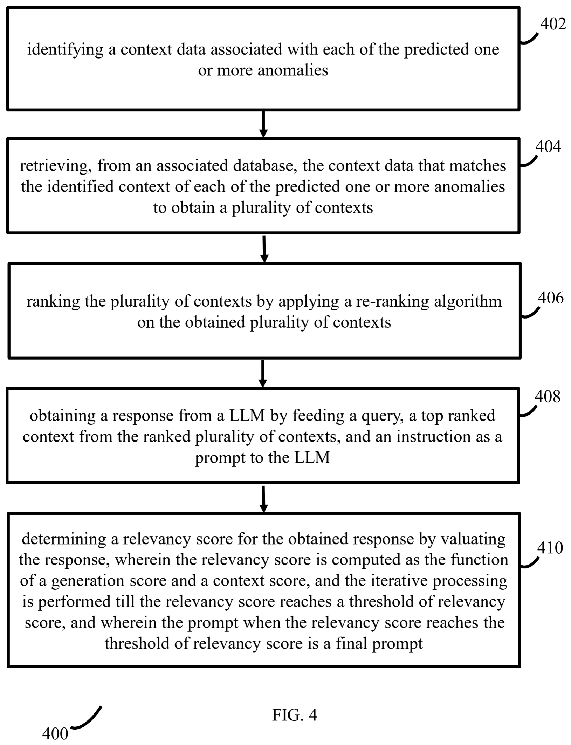

Referring back to method 200, at step 208, the system 100 generates a prompt, via the one or more hardware processors 102, based on the predicted one or more anomalies. To generate the prompt, the system 100 iteratively performs steps in method 400 in FIG. 4. At step 402 of the method 400, the system 100 identifies a context data associated with each of the predicted one or more anomalies, from a context information given as input. The context data is domain specific , i.e., varies from domain to domain.. viz, banking, health care, retail, education, etc. At this step, the system 100 chunks data associated with each of the predicted one or more anomalies, using an appropriate chunking technique, to ensure that semantic meaning is not lost during processing of entire data together. Further, at step 404 of the method 400, the system 100 retrieves, from an associated database, the context data that matches the identified context of each of the predicted one or more anomalies to obtain a plurality of contexts. The database that stores the context data maybe populated with context data associated with data that may have been processed in past instances, i.e., historical data. Further, at step 406 of the method 400, the system 100 ranks the plurality of contexts by applying a re-ranking algorithm on the obtained plurality of contexts, to obtain a plurality of ranked contexts. In an embodiment, the re-ranking algorithm prioritizes most relevant retrieved contextual information. Any known re-ranking approach can be used. For example, a cross-encoder re-ranker which is based on "semantic similarity" is used. Cross-encoders calculate the similarity between contexts and a given query, where both the query and the contexts are encoded together. The query and the retrieved context are passed to a re-ranker model, which encodes them concurrently and then generates a classification score that reflects the relevance of the context in relation to the given query. Further, at step 408, the system 100 feeds a query, a top ranked context (i.e., a context having highest rank from among the plurality of contexts) from the ranked plurality of contexts, and an instruction, as a prompt to the LLM, and obtains a response from the LLM. In an embodiment, though it is mentioned that LLM is used at this stage, any generic GenAI model having multi-modal capability can be used. For the purpose of explanation, LLM is considered. However, a person skilled in the art may appreciate that this is not intended to restrict scope of embodiments disclosed herein to use of LLM alone. Further, at step 408 of the method 400, the system 100 determines a relevancy score for the obtained response by valuating the response. The relevancy score is a function of metrics that considers both response generation and context retrieval aspects. The relevancy score is computed as the function of a generation score and a context score, as: $Relevancy score = f \left(w_g*Generation_score, w_c*Context_score\right) ,$ Where,
Generation_score metric is evaluation of accuracy and relevance of a final response generated, from a metric faithfulness and answer relevancy respectively, and is represented as: $Generation _ score = f \left(w_f*Faithfulness, w_r*Answer Relevancy\right)$ Here,
Faithfulness: measures the factual accuracy of the response generated based on the retrieved documents.
Answer Relevancy: evaluates how relevant the generated response is to the original query.

The context_score metric is the measure of the precision and relevancy of the retrieved contextual information, from **Context Precision** metric and **an Answer Relevancy metric** respectively. The **context precision** measures the precision of the retrieved contexts in providing relevant information to the query, and the **context recall** assesses the relevancy of the retrieved contexts. Calculation of the context score is represented as: $Context _ score = f \left(w_cp*Context_Precision, w_cr*Context_Recall\right)$ Where,
**f** can be a linear or a non-linear function,
different weights can be assigned to the relevancy score, the generation metric, and the context metric calculation. The weights are decided based on the business requirement as well as the other KPI requirements. The weights are determined based on various qualitative and quantitative information. Examples of the qualitative Information are Seasonality, Correlation, and Pattern. Similarly, some examples of the quantitative information are Accuracy percentage, Latency, Throughput, complexity, memory and processor requirement. To determine the weights, the business and KPI requirements also are taken into consideration. For an example, in some applications or business use cases, whether one needs the anomaly detecting method is to be generic or specific, whether it should be taking less time or more time for computation - that decides the weight W_cr and whether seasonality is important that decides w_cp.

The iterative processing of the steps in the method 400 is performed till the relevancy score reaches a threshold of relevancy score. The prompt when the relevancy score reaches the threshold of relevancy score is a final prompt.

Referring back to method 200, at step 210, the system 100 determines a cause and solution of each of the one or more anomalies by prompting the LLM using the final prompt. In various embodiments, the determined cause maybe known or unknown. If the cause is a previously known one, then the system 100 compares the determined cause against previous cause and solutions pairs obtained at previous instances, which may be stored in an associated as stored in the database, and when a matching cause is found, corresponding solution and that solution is applied as the solution for the determined cause. This can be done by the AI models associated with an Analytics Engine of the system 100 (as depicted in FIG. 5) with the help of another module 'AI prescription handler' in FIG. 5. In another embodiment, if the determined cause is unknown, i.e., not matching any of the causes in the cause and solutions pairs obtained at the previous instances, then the system 100 triggers a GenAI model (as represented by 'GenAI prescription handler' in FIG. 5) to further probe and identify the cause and the solution. The cause and solution determined using one of these approaches is then whose cause matches with the currently determined cause. This is further verified against an original cause and an original solution. The system 100 then verifies the determined cause and solution of each of the one or more anomalies against an original cause and an original solution. The determined cause, generated by the LLM, is automatically verified using a plurality of pre-programmed subroutines. The plurality of pre-programmed subroutines utilize a plurality of network tools for verifying the determined cause. The decision on which network tool is to be used at each instance maybe based on learnings from past instances. The determined cause and solution, upon successful verification, maybe then displayed to the user. The core advantage of using such a method is twofold. Firstly, by verifying the cause, the user has assurance that the problem has indeed occurred and increases confidence in the methodology. Secondly, the automated process greatly improves the response time of the system. Normally, an on-call engineer (OCE) needs to manually check using the same tool, which now has been replaced by the subroutine. The subroutine, once created, can be reused for the same class of problems.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of anomaly cause and solution detection. The embodiment, thus provides a mechanism for anomaly detection. Moreover, the embodiments herein further provide a mechanism for prompt generation to trigger an LLM for the anomaly cause and solution detection.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
receiving (202), via one or more hardware processors, an input data comprising information on one or more applications and associated underlying networks information;
pre-processing (204), via the one or more hardware processors, the input data to generate a pre-processed input data, wherein the processed input data is stored in an associated common data model;
predicting (206), via the one or more hardware processors, one or
more anomalies in the pre-processed data, comprising:
extracting (302) a plurality of features from the input data;
identifying (304) at least one anomaly detection algorithm to process the input data, based on the extracted plurality of features; and
predicting (306) the one or more anomalies by processing the input data using the identified at least one anomaly detection algorithm;
generating (208) a prompt, via the one or more hardware processors,
based on the predicted one or more anomalies, comprising iteratively performing:
identifying (402) a context data associated with each of the predicted one or more anomalies;
retrieving (404), from an associated database, the reference context data that matches the identified context of each of the predicted one or more anomalies to obtain a plurality of contexts;
ranking (406) the plurality of contexts by applying a re-ranking algorithm on the obtained plurality of contexts;
obtaining (408) a response from a Large Language Model (LLM) by feeding a query, a top ranked context from the ranked plurality of contexts, and an instruction as a prompt to the LLM; and
determining (410) a relevancy score for the obtained response by valuating the response, wherein the relevancy score is computed as the function of a generation score and a context score, and the iterative processing is performed till the relevancy score reaches a threshold of relevancy score, and wherein the prompt when the relevancy score reaches the threshold of relevancy score is a final prompt; and
determining (210), via the one or more hardware processors, a cause and solution of each of the one or more anomalies by prompting the LLM using the final prompt.

2. The method as claimed in claim 1, wherein the input data comprises of at least one of a network services context and a business context, and wherein the network services context and a business context comprises of a business requirement, a revenue-driven user experience, a service requirement, a functional-driven attribute delivery, a time series data, and real-time sensing data.

3. The method as claimed in claim 1, wherein the at least one anomaly detection algorithm is selected from a plurality of anomaly detection algorithms based on a metric score, and wherein the metric score is a function of a Qualitative data and a Quantitative data determined from a business context and associated one or more key performance indicators.

4. The method as claimed in claim 1, wherein the determined cause and solution of each of the one or more anomalies is verified against an original cause and an original solution.

5. The method as claimed in claim 1, wherein the determined cause, generated by the LLM, is automatically verified using a plurality of pre-programmed subroutines, and wherein the plurality of pre-programmed subroutines utilize a plurality of network tools for verifying the determined cause.

6. A system (100), comprising:
one or more hardware processors (102);
a communication interface (112); and
a memory (104) storing a plurality of instructions, wherein the plurality of instructions cause the one or more hardware processors to:
receive an input data comprising information on one or more applications and associated underlying networks information;
pre-process the input data to generate a pre-processed input data, wherein the processed input data is stored in an associated common data model;
predict one or more anomalies in the pre-processed data, by:
extracting a plurality of features from the input data;
identifying at least one anomaly detection algorithm to process the input data, based on the extracted plurality of features; and
predicting the one or more anomalies by processing the input data using the identified at least one anomaly
detection algorithm;
generate a prompt based on the predicted one or more anomalies, by iteratively performing:
identifying a context data associated with each of the predicted one or more anomalies;
retrieving, from an associated database, the context data that matches the identified context of each of the predicted one or more anomalies to obtain a plurality of contexts;
ranking the plurality of contexts by applying a re-ranking algorithm on the obtained plurality of contexts;
obtaining a response from a LLM by feeding a query, a top ranked context from the ranked plurality of contexts, and an instruction as a prompt to the LLM; and
determining a relevancy score for the obtained response by valuating the response, wherein the relevancy score is computed as the function of a generation score and a context score, and the iterative processing is performed till the relevancy score reaches a threshold of relevancy score, and wherein the prompt when the relevancy score reaches the threshold of relevancy score is a final prompt; and
determine a cause and solution of each of the one or more anomalies by prompting the LLM using the final prompt.

7. The system as claimed in claim 6, wherein the input data comprises of at least one of a network services context and a business context, and wherein the network services context and a business context comprises of a business requirement, a revenue-driven user experience, a service requirement, a functional-driven attribute delivery, a time series data, and real-time sensing data.

8. The system as claimed in claim 6, wherein the one or more hardware processors are configured to select the at least one anomaly detection algorithm from a plurality of anomaly detection algorithms, based on a metric score, and wherein the metric score is a function of a Qualitative data and a Quantitative data determined from a business context and associated one or more key performance indicators.

9. The system as claimed in claim 6, wherein the one or more hardware processors are configured to verify the determined cause and solution of each of the one or more anomalies against an original cause and an original solution.

10. The system as claimed in claim 6, wherein the the one or more hardware processors are configured to automatically verify the determined the cause, generated by the LLM, using a plurality of pre-programmed subroutines, and wherein the plurality of pre-programmed subroutines utilize a plurality of network tools for verifying the determined cause.

11. One or more non-transitory machine-readable information storage mediums comprising one or more instructions which when executed by one or more hardware processors cause:
receiving an input data comprising information on one or more applications and associated underlying networks information;
pre-processing the input data to generate a pre-processed input data, wherein the processed input data is stored in an associated common data model;
predicting one or more anomalies in the pre-processed data, comprising:
extracting a plurality of features from the input data;
identifying at least one anomaly detection algorithm to process the input data, based on the extracted plurality of features; and
predicting the one or more anomalies by processing the input data using the identified at least one anomaly detection algorithm;
generating a prompt based on the predicted one or more anomalies, comprising iteratively performing:
identifying a context data associated with each of the predicted one or more anomalies;
retrieving from an associated database, the reference context data that matches the identified context of each of the predicted one or more anomalies to obtain a plurality of contexts;
ranking the plurality of contexts by applying a re-ranking algorithm on the obtained plurality of contexts;
obtaining a response from a Large Language Model (LLM) by feeding a query, a top ranked context from the ranked plurality of contexts, and an instruction as a prompt to the LLM; and
determining a relevancy score for the obtained response by valuating the response, wherein the relevancy score is computed as the function of a generation score and a context score, and the iterative processing is performed till the relevancy score reaches a threshold of relevancy score, and wherein the prompt when the relevancy score reaches the threshold of relevancy score is a final prompt; and
determining a cause and solution of each of the one or more anomalies by prompting the LLM using the final prompt.

12. The one or more non-transitory machine readable information storage mediums as claimed in claim 11, wherein the input data comprises of at least one of a network services context and a business context, and wherein the network services context and a business context comprises of a business requirement, a revenue-driven user experience, a service requirement, a functional-driven attribute delivery, a time series data, and real-time sensing data.

13. The one or more non-transitory machine readable information storage mediums as claimed in claim 11, wherein the at least one anomaly detection algorithm is selected from a plurality of anomaly detection algorithms based on a metric score, and wherein the metric score is a function of a Qualitative data and a Quantitative data determined from a business context and associated one or more key performance indicators.

14. The one or more non-transitory machine readable information storage mediums as claimed in claim 11, wherein the determined cause and solution of each of the one or more anomalies is verified against an original cause and an original solution.

15. The one or more non-transitory machine readable information storage mediums as claimed in claim 11, wherein the determined cause, generated by the LLM, is automatically verified using a plurality of pre-programmed subroutines, and wherein the plurality of pre-programmed subroutines utilize a plurality of network tools for verifying the determined cause.
